# EUROPEAN PATENT APPLICATION

(11) **EP 1 560 363 A1**
(43) Date of publication of application: **03.08.2005**
(21) Application number: 05100414.1
(22) Date of filing: 24.01.2005
(51) Int. Cl.: H04L 12/18, H04L 12/58

(54) **Instant message mass update generated from website**

(30) Priority: 29.01.2004 US 767785
(71) Applicant: AT&T Corp., New York, NY 10013-2412 (US)
(72) Inventor: Werner, Carl Edward, Holmdel NJ New Jersey 07733 (US)
(74) Representative: Harding, Richard Patrick

(57) **Abstract**

A quick and efficient method of disbursing system "alerts" and "updates" to computers utilizes automated IM messages that are sent to targeted IM groups, where the groups are "targeted" by a system administrator based upon the definitions of the various IM groups. The automated IM will appear as a "pop up" to each IM session member in real time, and may include a "trailer" defining the message as automated and thereby not allowing the IM members to respond (other than to acknowledge receipt, if desired). The system administrator may also include a listing of email addresses for the various members of each IM group, where an email message including the update/alert may be sent to any IM group member not involved in an IM session when the automated IM message is sent.

## Description

### Technical Field

The present invention relates to instant messaging (IM) and, more particularly, to the use of IM to quickly and efficiently transmit "updates" to a group of computer users.

### Background of the Invention

Computer networks, such as the Internet, are extensively used for storage and retrieval of a vast reservoir of information. Person-to-person communication, in the form of electronic mail (e-mail) has also become widely accepted as a replacement for conventional mail and facsimile communication. Any individual who has access to the Internet can establish an e-mail account and communicate with other individuals on the Internet.

A relatively new form of e-mail communication, known as "instant messaging" (or "IM") is gaining popularity among computer users. Instant messaging allows individuals to monitor the presence of their friends and colleagues on an IM system of the Internet, and to exchange messages and files with those friends and colleagues. To use IM, a user of the Internet executes an IM client on their computer system. The client allows the user to specify a personal identifier, often referred to as a screen name or nickname, by which the user is known to the IM system. The IM client also allows the user to specify a list of known identifiers for other users of the IM system, often defined as a "buddy list". When the IM client begins execution, it sends a message to an IM server on the Internet, informing it of the user's availability, or presence, for IM purposes, and querying the IM server as to whether the individuals on the buddy list are also present, that is, whether they are connected to the Internet, have a compatible IM client executing on their computer, and have designated themselves as present to the IM client. The IM server maintains a list of registered identifiers for the users of the IM system. When it receives the login and buddy list messages from the user's client, the IM server flags the user's identifier as being in a present state, and looks up the buddy list nicknames to determine whether they are also in a present state. The server returns a response to the user's IM client, indicating which members of the buddy list are present. On the basis of this information, the user's IM client provides a visual indication of the presence of individual members of the user's buddy list. The user may exchange quasi real-time "instant" messages with other users who are present on the IM system.

In another aspect of computer communications, data network systems engineers that run managed accounts need to be updated when events that affect all of them as a group occur. For example, if a security vulnerability in a router's software is found, all of the systems engineers need to be alerted that their networks are vulnerable to hackers. At the present time, "word of mouth", media events and e-mail are the best methods used to pass this information on to, hopefully, everyone who "needs to know".

Thus, it would be desirable to find another, better method of distributing updates/warnings to Internet users and system administrators.

### Summary of the Invention

The need remaining in the prior art is addressed by the present invention which related to instant messaging (IM) and, more particularly, to the use of IM to quickly and efficiently transmit "updates" to a group of computer users.

In accordance with the present invention, an update/alert will be transmitted to all members of an Instant Messaging (IM) group via a live session. If some members of the IM group are not involved in the IM session at the time of the update, an e-mail will be sent as a back-up method of reaching those members. In a preferred embodiment, the delivery would be a one-way message, appearing as a "pop-up" to the IM group member. A "trailer" could be attached telling the IM group member that the update/alert is an "automated IM to which you cannot respond". In an alternative embodiment, the IM alert may request a confirmation of receipt from each IM group member to allow the sender to know who has received the alert/update. Thus, if an acknowledgement is not received from one or more IM group members, an e-mail version of the alert may be transmitted to those individuals.

Various features and arrangements of the present invention will become apparent during the course of the following discussion and by reference to the accompanying drawings.

### Brief Description of the Drawings

A preferred embodiment of the invention will now be described, by way of example, with reference to the accompanying drawings, in which:

FIG. 1 illustrates an exemplary data networking environment that can support the IM mass alert procedure of the present invention;

FIG. 2 illustrates an exemplary IM screen shot;

FIG. 3 contains an exemplary graphical user interface (GUI) as seen by the website administrator of the IM alert service of the present invention; and

FIG. 4 is a flowchart illustrating an exemplary process of transmitting IM update/alert messages in accordance with the present invention.

### Detailed Description

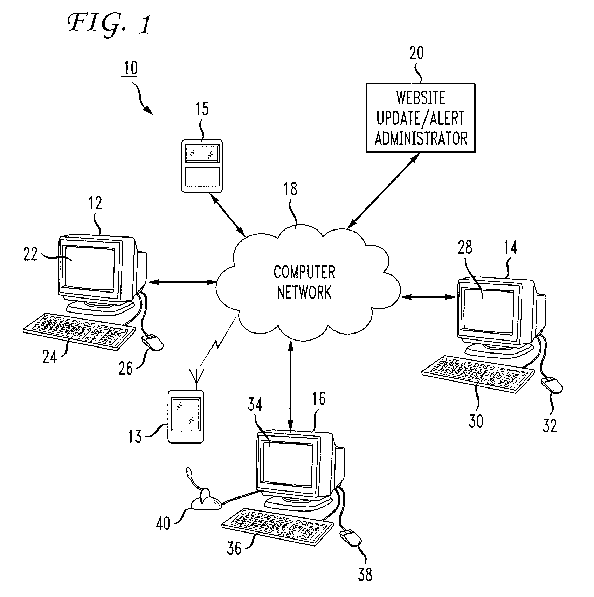

FIG. 1 illustrates an exemplary data networking environment 10 for allowing instant messaging (IM) between a plurality of different computer terminals 12, 14, and 16 all interconnected through a computer network 18, such as the Internet. It is to be understood that environment 10 will usually include a significantly larger number of interconnected computer terminals. For the sake of clarity, only three such terminals are included in the arrangement of FIG. 1. An update/alert administrator 20 is illustrated as also coupled to computer network 18. The function of update/alert administrator 20 will be discussed in detail below.

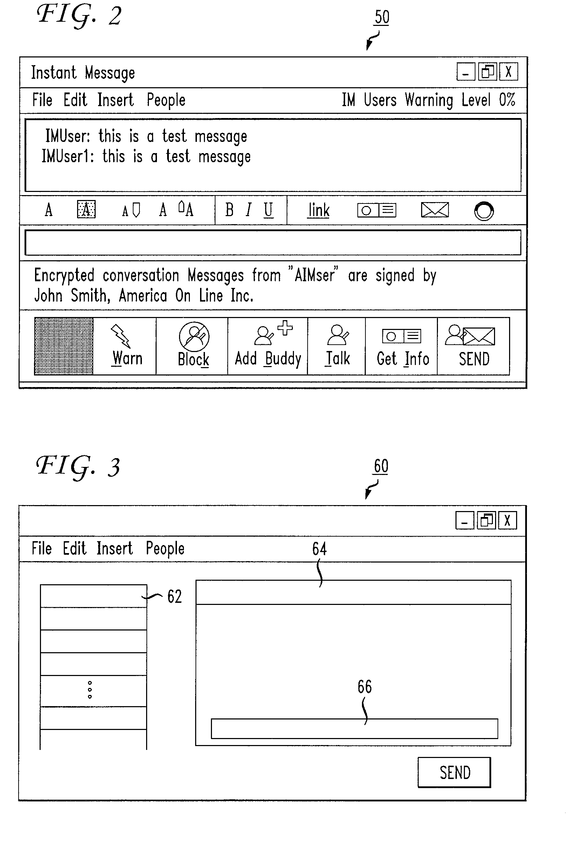

Referring back to FIG. 1, a conventional IM session occurs when computers 12, 14 and 16 are engaged in sending various transmissions to each other. Computer 12 includes a monitor 22, keyboard 24 and mouse 26, where keyboard 24 and mouse 26 are used to input messages that are transmitted to computers 14 and 16 during an IM session. Similarly, computer 14 includes a monitor 28, keyboard 30 and mouse 32. Computer 16 includes a monitor 34, keyboard 36, mouse 38 and microphone 40, allowing audio messages to also be transmitted to computers 12 and 14 (i.e., "IP telephony" messages). It is to be understood that although the term "computer" will be used hereinafter to describe the device that receives the IM alert, it is to be understood that various other communication devices, such as a cell phone 13 or PDA 15 (as shown in FIG. 1) may also include the text messaging capabilities to send/receive instant messages. In general, any device capable of being connected to a data network and performing messaging may be used as an alert-receiving device in accordance with the present invention. Referring back to FIG. 1, an IM session occurs when two or more of the members of the IM group engage in an ongoing electronic "chat" by simply typing a message into the keyboard and pressing the "enter" button on the computer keyboard or by clicking on a "send" icon on the computer display screen. FIG. 2 includes a "screen shot" 50 of an exemplary IM session between two users - "IMUser" and "IMUser1".

In accordance with the present invention, update/alert administrator 20 receives a particular "update" message that is to be sent to a targeted set of IM groups. Administrator 20 includes means for receiving update/alert messages, manipulating the messages, retrieving "target" IM groups to receive the messages, and sending the alert to the retrieved IM groups. FIG. 3 is a screen 60 illustrating a graphical user interface (GUI) at administrator 20 that may be used retrieve a list of target IM groups 62 and a text message box 64 for creating the particular alert/update to be sent to various IM groups. The underlying software at administrator 20 then interfaces with an IM API that delivers the associated message to each of the IM users for the plurality of target IM groups 62. It is to be understood that depending upon the alert/update received by administrator 20, various and different target IM groups may be identified as needing to receive the message. Moreover, it is to be understood that the various end users in an IM session may play of the role of "administrator" as well, sending the alert/update to other members of the group.

In the event a member of an IM group is not participating in the chat session (i.e., either the user is off-line or online, but not engaged in the session) at the time the message is sent, administrator 20 will retrieve the member's email address and send the alert/update via email. The preferred delivery method, however, remains the IM mode, since it is quicker - essentially sent as a pop-up message to the group members during an IM session. Preferably, the message includes a "trailer" 66, stating that the message is an "automated IM" from a system administrator and cannot be responded to. A minimal type of "acknowledgement" signal may, however be sent by the IM group member as an automated response, merely to allow the administrator to know which group members have received the message. The acknowledgement may be as simple as typing some text and hitting "return" on the open IM session. If received via e-mail, a "reply to sender" may be used as the acknowledgement. Administrator 20 is utilized to manage the responses and correlate the responses with the IM group members to ensure that the alert was received by every member of the targeted IM group.

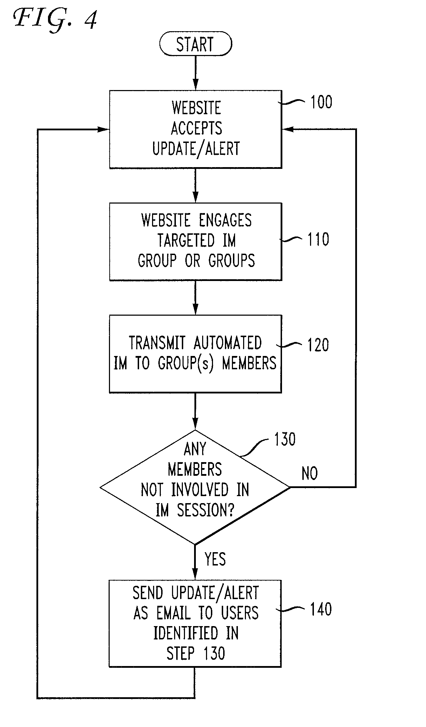

FIG. 4 contains a flowchart illustrating the process of the present invention. As shown, the process begins (upon starting) by the update/alert administrator receiving a "message" from the network that is to be distributed to one or more IM sessions (step 100). The administrator website then retrieves a listing of the targeted IM groups (step 110), develops the message to be transmitted and transmits the automated IM to each on-line group member (step 120). A query is launched to determine if any group members are not "involved in the IM session" at the time the update/alert is being transmitted (step 130). If all members are "in IM session", then everyone who needs to know has received the update/alert and the process returns to step 100 to wait for the next update/alert. If one or more members were not participating in the IM session when the message was sent, the website administrator next functions to retrieve the email addresses of those members and uses an email message to forward the update/alert (step 140) not involved in the IM session. At the completion of sending the email, the process will also cycle back and wait for the next update/alert to be received.

It is to be understood that even though various embodiments and advantages of the present invention have been set forth in the foregoing description, the above disclosure is illustrative only, and changes may be made in detail, yet remain within the broad principles of the invention. Heretofore, the present invention is to be limited only by the claims appended hereto.

## Claims

1. An arrangement for transmitting electronic updates/alerts over a data network to a plurality of data network system users, the arrangement comprising:
a website update/alert administrator, coupled to the data network, for receiving update or alert messages from said network, said website update/alert administrator including a database of instant messaging (IM) groups and a listing targeting various IM groups to associate with different types of updates and alerts, the administrator including a transmission element for sending an automated IM to each member of each targeted IM group, the automated IM including the update/alert message information.

2. The arrangement of claim 1, wherein the website update/alert administrator further includes a listing of email addresses for each member of each IM group, wherein an email version of an update/alert is sent if a member is not involved in the IM session at the time the automated IM is sent.

3. The arrangement of claim 2, wherein the email version of the update/alert requests an acknowledge reply from each IM group member receiving the email version of the update/alert.

4. The arrangement of claim 1, 2 or 3, wherein the automated IM includes a trailer portion indicating that the IM is "automated" and "cannot be responded to".

5. The arrangement of any preceding claim, wherein the automated IM includes a request for acknowledge of receipt by each IM group member to confirm that each member of the IM group has received the update/alert.

6. A method of transmitting update/alert messages over a data network to a plurality of data network system users, the method comprising the steps of:
a) receiving, at a website administrator, an update/alert message to be sent to a plurality of system users,
b) using the message information, retrieving a targeted listing of IM groups to whom the update/alert message should be sent; and
c) transmitting the update/alert message as an automated IM to each member of each targeted IM group.

7. The method as defined in claim 6, wherein the method further comprises the steps of:
d) determining if any members of any targeted groups are not involved in the IM session at the time the automated IM is sent; and, if so,
e) retrieving the email address of each user not involved in the IM session; and
f) transmitting an email version of the automated IM to each user not involved in the IM session.

8. The method as defined in claim 7, wherein the transmitted email version includes a request for each user to transmit a confirmation reply message.

9. The method as defined in claim 6, 7 or 8, wherein the automated IM message transmitted in step c) includes a trailer portion indicating that the message is "automated" and "cannot be responded to".

10. The method as defined in any one of claims 6 to 9, wherein the automated IM message transmitted in step c) includes a request to acknowledge receipt of the message by each IM group member by transmitting a confirmation reply message to the website administrator.

11. The method as defined in claim 10, wherein the method further comprises the step of:
g) associating each received acknowledgement with a proper IM group member to determine which IM groups have received the update/alert and which IM group members have not received the update/alert.
